# DEMANDE DE BREVET EUROPEEN

(11) **EP 3 270 035 A1**
(43) Date de publication de la demande: **17.01.2018**
(21) Numéro de dépôt: 17178754.2
(22) Date de dépôt: 29.06.2017
(51) Int. Cl.: F17C 13/08

(54) **DISPOSITIF DE FOURNITURE DE GAZ**

(30) Priorité: 13.07.2016 FR 1656731
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: DE POTTER, Romuald, 95150 TAVERNY (FR); LIGONESCHE, Renaud, 95220 HERBLAY (FR); FRENAL, Antoine, 95460 EZANVILLE (FR); MULLER, Denis, 92500 RUEIL MALMAISON (FR); BERNARD, Philippe, 60000 GOINCOURT (FR); VIGNEROL, Samuel, 78330 FONTENAY LE FLEURY (FR)
(74) Mandataire: De Cuenca, Emmanuel Jaime

(57) **Abrégé**

Dispositif (100) de fourniture de gaz comprenant un cadre (1) muni d'une base et abritant une pluralité de bouteilles (2) de fluide sous pression reliées à circuit (7) fluidique comprenant une première extrémité de raccordement reliée aux bouteilles et une seconde extrémité comprenant au moins un raccord (10) fluidique destiné à être raccordé de façon amovible avec un organe de soutirage ou de remplissage des bouteilles (2), le cadre (1) comprenant, sur une de ses faces, au moins une ouverture (20) d'accès à au moins un raccord (10) du circuit (7), le cadre (1) comprenant en outre au moins un organe (16, 150) d'accrochage prévu pour coopérer avec un appareil de levage du cadre (1), caractérisé en ce que le dispositif comprend au moins un capteur (110) de levage du cadre (1) via le au moins un organe (16, 160) d'accorchage et au moins un capteur (41) de détection d'un accès à un raccord (10), le dispositif comprenant en outre au moins un organe (120, 130, 140) d'alerte configuré générer automatiquement une alerte lorsqu'à la fois le capteur (110) de levage détecte un levage du cadre et le capteur (41) de détection d'accès détecte un accès à un raccord (10).

## Description

La présente invention concerne un dispositif de fourniture de gaz.

L'invention concerne plus particulièrement un dispositif de fourniture de gaz comprenant un cadre muni d'une base et abritant une pluralité de bouteilles de fluide sous pression reliées à circuit fluidique pour assurer le soutirage ou le remplissage des bouteilles, ledit circuit comprenant une première extrémité de raccordement reliée aux bouteilles et une seconde extrémité comprenant au moins un raccord fluidique destiné à être raccordé de façon amovible avec un organe de soutirage ou de remplissage des bouteilles, le cadre comprenant, sur une de ses faces, au moins une ouverture d'accès à au moins un raccord du circuit, le cadre comprenant en outre au moins un organe d'accrochage prévu pour coopérer avec un appareil de levage du cadre.

L'invention concerne notamment les dispositifs de fourniture de gaz appelés parfois « cadres ». L'invention concerne ainsi en particulier les cadres de bouteilles de fluide sous pression, c'est-a-dire les dispositifs comprenant un châssis formant un support pour plusieurs bouteilles de fluide. Ces cadres comprennent généralement au moins un raccord commun pour les bouteilles. Du fait de leur masse et de leur encombrement, ces cadres sont munis d'organes de manutention destinés à coopérer avec des appareils de levage (grues et/ou chariots élévateurs).

De nombreux accidents sont susceptibles de se produire sur les installations de remplissage de cadres de bouteilles de gaz ou sur les installations de distribution de gaz à partir de cadres de bouteilles. L'accident le plus fréquent est l'arrachage du flexible relié au cadre lors d'une manutention du cadre de bouteilles alors que le cadre est encore connecté fluidiquement à l'installation de remplissage ou de distribution de gaz.

De nombreux dispositifs existent sur les installations afin d'éviter ces accidents potentiellement dangereux. Par exemple, il est connu d'utiliser une pancarte apposée sur le cadre par l'operateur pour rappeler que le cadre ne doit pas être déplacé lorsqu'il est connecté fluidiquement. Une autre solution connue consiste à utiliser une barrière automatique qui empêche l'accès au cadre pour un chariot élévateur lorsque le cadre est en cours d'utilisation. Une autre solution consiste à utiliser des dispositifs de signalisation automatiques qui sont déployés en même temps qu'un flexible de soutirage/remplissage est branche au cadre.

Le document FR2988158A1 décrit une solution dans laquelle un mécanisme de liaison et de transmission de mouvement est prévu pour relier l'organe de manutention du cadre à un cache mobile d'accès aux raccords fluidiques. C'est-à-dire que l'organe de manutention (anneau de levage par exemple) est escamoté tant que l'accès au raccord n'est pas obturé.

Ces solutions sont cependant imparfaites car, soit elles reposent sur un facteur humain, soit elles sont difficilement déployables pour des raisons de coût, de complexité mécanique ou logistique.

Un but de la présente invention est de pallier tout ou partie des inconvénients de l'art antérieur relevés ci-dessus.

A cette fin, le dispositif selon l'invention, par ailleurs conforme à la définition générique qu'en donne le préambule ci-dessus, est essentiellement caractérisé en ce qu'il comprend au moins un capteur de levage du cadre via le au moins un organe d'accorchage et au moins un capteur de détection d'un accès à un raccord, le dispositif comprenant en outre au moins un organe d'alerte configuré générer automatiquement une alerte lorsqu'à la fois le capteur de levage détecte un levage du cadre et le capteur de détection d'accès détecte un accès à un raccord.

Par ailleurs, des modes de réalisation de l'invention peuvent comporter l'une ou plusieurs des caractéristiques suivantes :
- le cadre comprend un panneau d'interface, l'ouverture d'accès au(x) raccord(s) étant ménagée dans ledit panneau, le capteur de détection d'accès au(x) raccord(s) étant configuré pour détecter un accès au(x) raccord(s) via ladite ouverture,
- le au moins un organe d'accrochage comprend un anneau de levage situé en partie supérieure du cadre et solidaire de la structure du cadre, le cadre comprenant au moins un capteur de levage parmi : un capteur de détection d'un effort de traction sur l'anneau, un capteur de détection d'une connexion mécanique au niveau de l'anneau, le capteur réalisant via une mesure mécanique et/ou électrique et/ou optique et/ou magnétique,
- l'anneau est mobile en translation par rapport à la base du cadre entre une première position basse lorsque le cadre n'est pas soulevé via l'anneau et une seconde position haute lorsque le cadre est soulevé par l'anneau, le capteur de levage comprenant un interrupteur détectant le passage de l'anneau de la première à la seconde position,

- l'anneau est monté coulissant dans un tube creux du cadre formant un mât central relié à la base du cadre,
- le au moins un organe d'accrochage comprend un ou plusieurs logements ménagés dans la base du cadre, lesdits logements étant parallèles à la base du cadre et étant configurés pour accueillir une ou des fourches d'un engin de levage, le au moins un capteur de levage comprenant un interrupteur configuré pour être activé par l'introduction ou le mouvement d'un corps étranger tel qu'une fourche dans au moins un logement,
- l'anneau est solidaire de l'extrémité supérieure d'un axe monté coulissant dans le tube creux, l'extrémité inférieure dudit axe étant reliée à une palette débouchant dans le ou les logements, ladite palette étant mobile entre une position basse et une position haute,
- le au moins un capteur de levage comprend un interrupteur coopérant avec la palette ou une pièce reliée mécaniquement à la palette,
- le au moins un capteur de détection d'accès à un raccord comprend au moins un parmi : un capteur électrique, un capteur optique, un capteur mécanique, un capteur magnétique,
- le cadre comprend un cache mobile entre une première position de fermeture de la au moins une ouverture pour empêcher l'accès à un raccord et une seconde position d'ouverture autorisant l'accès au raccord, le au moins un capteur de détection d'accès à un raccord étant configuré pour détecter la position ouverte ou fermée dudit cache,
- le dispositif comprend au moins un organe d'alerte parmi : un avertisseur sonore, un avertisseur lumineux,
- le au moins un organe d'alerte est relié par voie filaire ou sans fil au(x)dit(s) capteurs.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue en perspective, schématique et partielle, illustrant un exemple de réalisation possible d'un dispositif selon l'invention,
- la figure 2 représente une vue en perspective, schématique et partielle, illustrant la partie supérieure d'un autre exemple de réalisation possible d'un dispositif selon l'invention,
- la figure 3 représente une vue en perspective et de dessus d'un détail du dispositif de la figure 2,
- la figure 4 représente une vue schématique et partielle illustrant un exemple possible de circuit électrique de détection et d'activation d'alarme du dispositif selon l'invention,
- la figure 5 représente deux vues en perspective d'un détail de la face avant du dispositif de la figure 1 ou 2 illustrant une ouverture d'un panneau d'interface selon respectivement deux configurations d'accès distinctes (respectivement fermée et ouverte),
- les figures 6 et 7 représentent des vues en coupe verticales, schématiques et partielles, illustrant un mode de réalisation possible du dispositif selon l'invention, selon respectivement deux configurations : non soulevé et soulevé,
- la figure 8 représente une vue en perspective, schématique et partielle, d'un détail du dispositif des figures 6 et 7 illustrant un exemple de structure de l'anneau de levage,
- la figure 9 représente une vue en coupe verticale, schématique et partielle, d'un détail de la partie inférieure d'un dispositif conforme aux figures 6 et 7 illustrant un capteur de levage du cadre,
- la figure 10 représente une vue en coupe verticale, schématique et partielle, d'un détail de la partie supérieure d'un dispositif conforme aux figures 6 et 7 illustrant un capteur de levage du cadre,
- la figure 11 représente une vue de dessous, schématique, partielle et en transparence, d'un dispositif conforme aux figures 6 et 7 illustrant la structure d'un capteur de levage du cadre,
- la figure 12 représente une vue de face, schématique et partielle, illustrant un exemple de système de détection de la position d'un cache ou volet tel que celui de la figure 5.

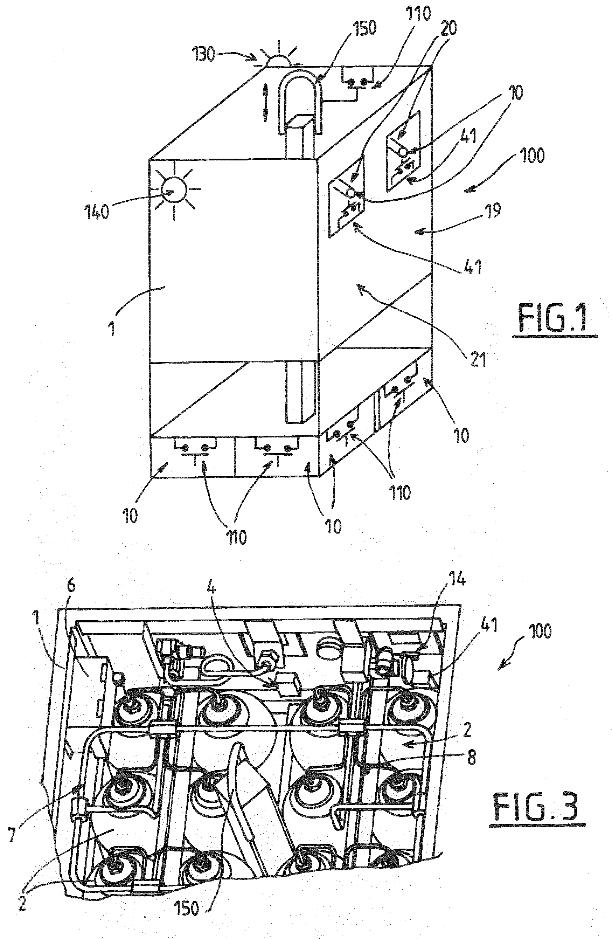

Le dispositif 100 de fourniture de gaz illustré notamment aux figures 1 à 3 comprend classiquement un cadre 1 support, comprenant par exemple une base formant le support d'une armature parallélépipédique abritant une pluralité de bouteilles 2 de fluide sous pression (par soucis de simplification les bouteilles ne sont pas représentées à la figure 1).

Le cadre 1 peut comporter classiquement une ossature métallique avec des composants verticaux et horizontaux formant une cage.

Par exemple, les bouteilles 2 sont disposées en faisceau verticalement sur un fond horizontal formé par la base (seize bouteilles 2 dans cet exemple non limitatif). Les orifices des bouteilles 2 sont reliés à un circuit 7 fluidique pour assurer le soutirage ou le remplissage des bouteilles 2.

Le circuit 7 peut comprendre une première extrémité formant un collecteur et reliée à chacune des bouteilles 2 via par exemple un premier clapet d'isolation et un détendeur de pression. Le circuit 7 peut comporter de façon connue en soit au moins une seconde extrémité de raccordement (munie par exemple d'un clapet d'isolation) et comportant un organe de connexion fluidique (raccord ou autre) pour permettre son branchement à un appareil de remplissage ou de soutirage, par exemple via un flexible.

Le cadre 1 peut comprendre sur une de ses faces, dite « face avant », un panneau 21 d'interface pour un utilisateur comprenant au moins une ouverture 20 d'accès au circuit 7 et notamment d'accès à un ou des raccords 10 fluidiques (raccord rapides ou autre) destinées à permettre le transfert de fluide depuis ou vers les bouteilles 2.

Le panneau 21 peut être une plaque et/ou une grille derrière lequel sont regroupés les organes fonctionnels (manomètre, vanne(s), raccords, organes de commande de ces appareils et tels que sélecteurs manuels de pression et/ou de débit, ...).

Le cadre 1 comprend en outre au moins un organe d'accrochage prévu pour coopérer avec un appareil de levage du cadre 1.

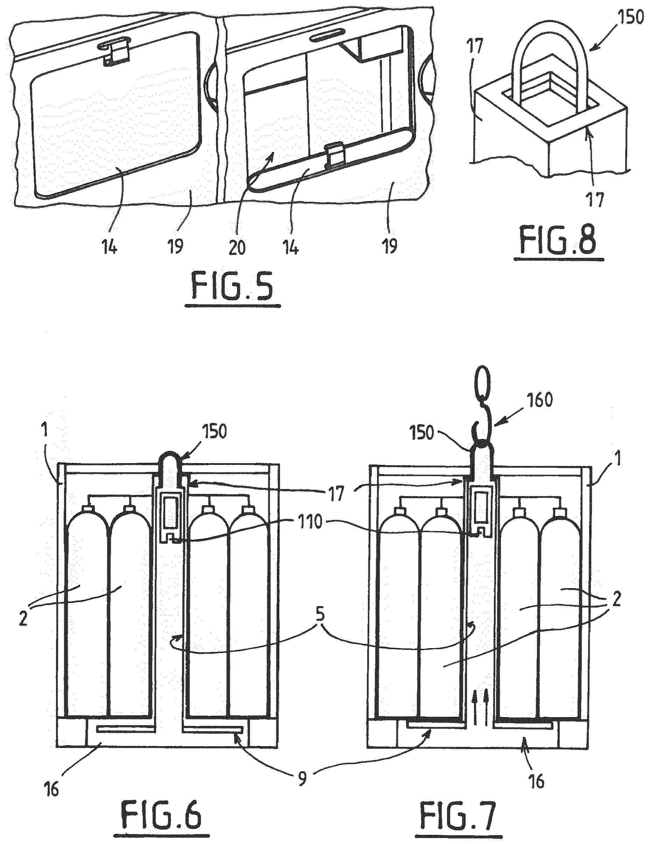

Par exemple, le cadre 1 peut comporter classiquement un anneau 150 de levage situé en partie supérieure du cadre 1 et solidaire de la structure du cadre 1. L'anneau 150 est prévu pour coopérer avec un crochet 160 d'une grue par exemple (cf. figure 7).

Dans l'exemple représenté le cadre 1 comprend également en partie inférieure des logements 16 ménagés dans la base du cadre 1. Les logements 16 sont parallèles à la base du cadre 1 et configurés pour accueillir une ou de préférence deux branches d'une fourche d'un engin de levage tel qu'un chariot élévateur par exemple.

Selon une particularité avantageuse, le dispositif comprend au moins un capteur 110 de levage du cadre 1 via le ou les organes 16, 150 d'accrochage et au moins un capteur 41 de détection d'un accès à un raccord 10 via une ouverture 20 du panneau. De plus, le dispositif comprenant en outre au moins un organe 120, 130, 140 d'alerte configuré pour générer automatiquement une alerte lorsqu'à la fois le capteur 110 de levage détecte un levage du cadre 1 et le capteur 41 de détection d'accès détecte un accès à un raccord 10 via l'ouverture 20. C'est-à-dire qu'en réponse à la détection simultanée d'une opération de levage (ou son commencement) et d'un accès à un raccord (ou son commencement ou sa possibilité), l'organe d'alerte génère en réponse une alerte pour un utilisateur pour lui signifier qu'il doit interrompre le levage et vérifier la sécurité du dispositif en s'assurant que l'accès au raccord n'est pas utilisé ou pas utilisable lors de la manutention du cadre 1.

Ceci permet ainsi d'alerter l'utilisateur d'une situation à risque pour empêcher la manutention du cadre 1 alors que qu'un raccord 10 est potentiellement encore raccordé à un flexible ou autre.

L'organe 120, 130, 140 d'alerte peut comprendre au moins l'un parmi un avertisseur sonore, un avertisseur lumineux, (gyrophare, LED, sirène...).

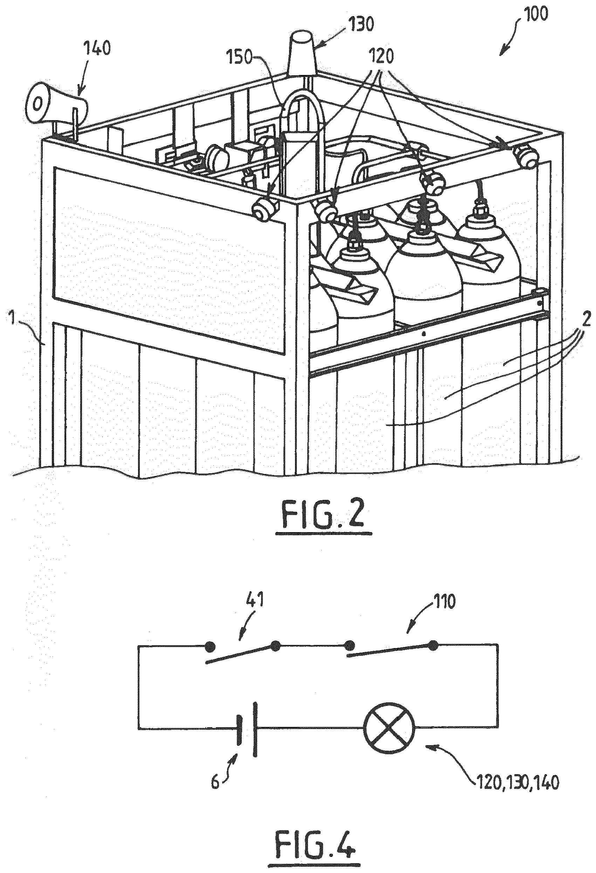

La figure 4 illustre schématiquement un exemple non limitatif d'un exemple de fonctionnement. Les deux capteurs 41, 110 sont disposés en série dans un circuit électrique et, lorsqu'ils détectent tous les deux en même temps l'évènement (levage et accès au raccord), ils ferment alors le circuit d'alimentation de l'organe 120, 130, 140 d'alerte. Dans l'exemple de la figure 4 le circuit simplifié est du type électrique et commande une alimentation électrique des organes d'alerte via une batterie 6. Bien entendu d'autres modes de réalisation sont possibles. Par exemple, les organes d'alerte 120, 130, 140 peuvent être reliés (ou peuvent intégrer) une logique électronique (microprocesseur, calculateur ou autre) qui reçoit les signaux des capteurs 41, 110. Les organes 120, 130, 140 d'alerte peuvent recevoir des signaux par voie filaire ou sans fil de la part des capteurs ou de la logique électronique.

Les organes 120, 130, 140 d'alerte peuvent être placés en partie supérieure du cadre 1, notamment sur l'ossature métallique.

Pour détecter un levage du cadre via l'anneau 150 le cadre 1 peut comporter au moins un capteur 110 de levage parmi : un capteur 110 de détection d'un effort de traction sur l'anneau 150 de levage, un capteur de détection d'une connexion mécanique au niveau de l'anneau 150 de levage. Le capteur 110 considéré peut réaliser par exemple une mesure mécanique et/ou électrique et/ou optique et/ou magnétique. Par exemple, il est possible d'envisager que la connexion mécanique d'un crochet de gue sur l'anneau 150 peut être détectée.

De la même façon, pour détecter un levage via la partie inférieure du cadre 1, le cadre peut comporter un capteur 110 de levage comprenant un interrupteur situé dans le ou les logements 16. L'interrupteur 110 peut être configuré pour être activé par l'introduction d'un corps étranger tel qu'une fourche dans au moins un logement 16.

Dans un mode de réalisation particulier possible représenté aux figures 6 à 8, l'anneau 150 de levage peut être monté mobile en translation par rapport à la base du cadre 1 entre une première position basse lorsque le cadre 1 n'est pas soulevé via l'anneau 150 (cf. figure 6) et une seconde position haute (en butée) lorsque le cadre 1 est soulevé par l'anneau 150 (cf. figure 7). Le capteur 110 de levage peut comprendre alors un interrupteur ou autre capteur détectant le passage de l'anneau 150 de la première à la seconde position (cf. figures 6 et 7).

Par exemple, et comme représenté aux figures 6 et 7, l'anneau 150 de levage peut être monté coulissant dans un tube 17 creux du cadre, ce tube 17 formant un mât central relié à la base du cadre 1.

Plus précisément, l'anneau 150 de levage peut être solidaire de l'extrémité supérieure d'un axe 5 monté coulissant dans le tube 17 creux.

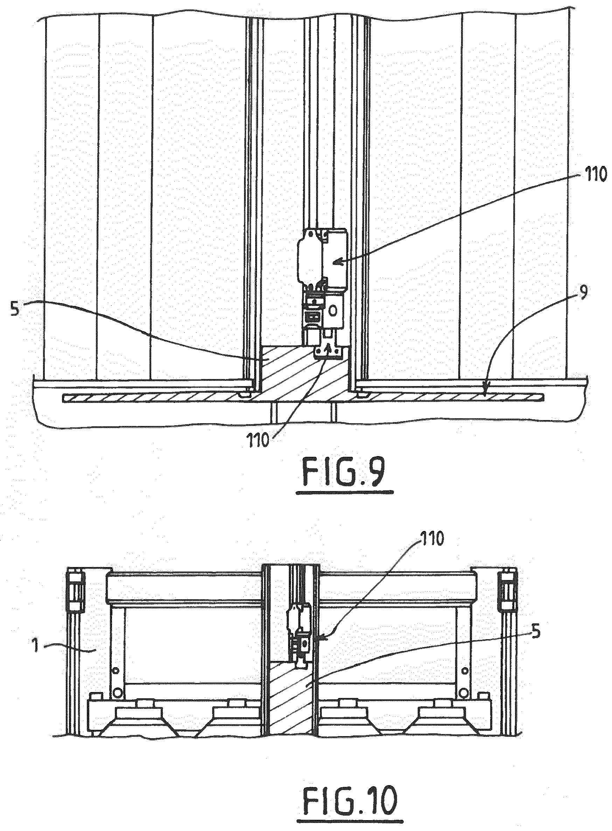

De plus, l'extrémité inférieure dudit axe peut reliée à une palette 9 inférieure. Lorsque le cadre 1 est soulevé par l'anneau 150, la palette 9 vient en butée contre un fond de la base du cadre 1 (cf. figures 7 et 9) et permet ainsi de soulever le cadre 1 et de répartir l'effort.

Ce mode de réalisation n'est cependant pas limitatif ni préféré. Ainsi, la palette 9 ne vient pas forcément en butée pour soulever le cadre. Par exemple, en position haute la palette 9 vient au moins au même niveau que les renforts de la structure inférieure du cadre qui servent de support pour le levage du cadre. C'est-à-dire que, en position haute de la palette 9, des ouvertures à la base du cadre sont libérées pour permettre le soulèvement du cadre (par exemple via des bras d'un chariot élévateur).

Lors du levage par une grue (figure 7), la pièce centrale munie de la palette 9 et de l'anneau de levage 150 coulisse dans le mât central 17 du cadre 1 et active le capteur 110. La cinématique de détection peut être identique à celle lors d'une levée par chariot élévateur (cf. ci-après).

Les figures 6 et 7 sont des vues en coupe longitudinale du cadre 1 montrant (figure 6), le cadre au repos (avant grutage), avec l'anneau de levage (anneau 150 en position basse) un capteur 110 activable en cas de traction sur l'anneau 150.

Comme décrit plus en détail ci-après, la palette 9 peut éventuellement déboucher dans le ou les logements 16 et peut former également tout ou partie d'un mécanisme de détection du levage par la partie inférieure du cadre 1.

C'est-à-dire que la palette 9 est par exemple mobile entre une position basse (cf. figure 6) et une position haute (cf. figures 7 et 9).

Comme illustré à la figure 9, le au moins un capteur 110 de levage peut comprendre un interrupteur disposé en partie inférieure du cadre 1 coopérant avec la palette 9 selon sa position pour détecter l'état soulevé ou non.

C'est-à-dire que des fourches 18 d'un chariot élévateur peuvent être introduites dans les passages 16 de la base du cadre 1, sous la palette 9 (introduction sous la forme d'un déplacement horizontal). Lorsque les fourches 18 sont relevées (déplacement vertical pour soulever le cadre 1), elles relèvent d'abord la palette 9 jusqu'à ce que cette dernière arrive en position haute dans la cadre 1. Ceci active le ou les capteurs 110 de levage.

Comme illustré en variante ou en combinaison à la figure 10, le capteur 110 peut également être positionné dans la partie haute du cadre 1, notamment pour éviter les problèmes d'accès pour la maintenance et de dégradation accéléré par l'environnement proche (boue, eau, végétaux en décomposition, etc...). En position haute du capteur, les fourches 18 du chariot sont de préférence en contact avec l'armature du cadre avant qu'il n'y ait contact entre la palette 9 et le plancher du cadre, afin de ne pas transmettre d'effort indésirable au cadre 1.

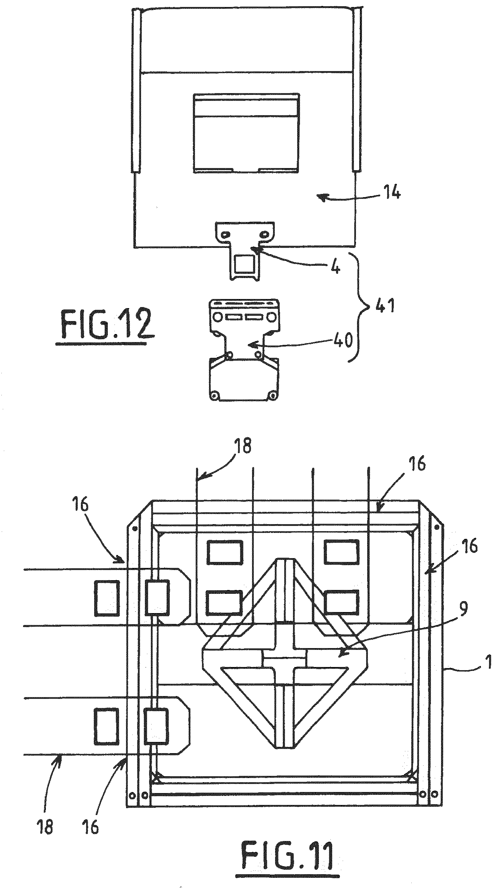

Comme illustré à la figure 11, la palette 9 peut avoir une forme plane, parallélépipédique, circulaire ou autre pour interférer en position basse avec une fourche 18 qui serait introduite dans les logements 16, quel que soit le côté du cadre 1 concerné. Alternativement, la palette 9 peut être configurée pour éviter, lors de l'insertion des fourches 18 dans les logements 16, un risque de choc.

De même, la palette 9 peut comporter des plans inclinés (par exemple vers le bas vers l'intérieur du cadre 1). Lors de l'insertion de fourches 18 dans les logements 16, dans le cas où la palette 9 est sur le trajet des fourches 18, les plans inclinés de la palette 9 peuvent induire une force résultante sur la palette 9 qui tend à la remonter pour libérer le passage pour les fourches 18. Cette remontée de la palette 9 sous l'action des fourches 18 qui entrent dans les logements 16 active le ou les capteurs 110 de levage.

La palette 9 permet ainsi une détection quel que soit l'angle d'entrée de la fourche 18 (dans le cas où des logements 16 sont prévus sur plusieurs faces adjacentes du cadre 1).

Pour détecter un accès à un raccord 10 via une ouverture 20 du panneau, le dispositif peut comporter un capteur 41 directement au niveau du raccord 10 pour détecter une connexion mécanique du raccord 10 avec un organe de soutirage/remplissage. Comme précédemment, ce capteur 41 d'accès au raccord 10 peut être mécanique, électrique, magnétique, optique et peut comporter en particulier un interrupteur ou tout autre élément approprié.

Dans un mode de réalisation illustré aux figures 5 et 12, le cadre 1 comprend un cache 14 ou volet mobile entre une première position (de préférence stable) de fermeture d'au moins une ouverture 20 pour empêcher l'accès à un raccord 10 et une seconde position d'ouverture (de préférence stable) autorisant l'accès au raccord 10. Le au moins un capteur 41 de détection d'accès à un raccord 10 peut être un capteur configuré pour détecter la position ouverte ou fermée dudit cache 14. La position ouverte du cache 14 est considérée comme un accès au raccord 10. C'est-à-dire que pour assurer un levage du cadre sans déclencher une alarme, le cache 14 doit être en position de fermeture.

Le cache 14 est par exemple mobile en translation et/ou en rotation et assure uniquement en position ouverte l'accès aux connectiques de remplissage/soutirage.

La figure 12 illustre un exemple d'agencement de capteur 41 de la position du cache 14 avec une partie mâle 4 par exemple solidaire du cache 14 mobile et une partie femelle 40 par exemple solidaire d'une partie fixe du cadre 1. L'ensemble 41 peut former par exemple un interrupteur (tel qu'un « microswitch »).

La figure 3 illustre un exemple de disposition des principaux organes logés à l'intérieur du cadre: bouteilles, 2 circuit 7, cache 14, capteur 41, batterie, 6, barres 8 de maintien des bouteilles 2...

Le système de détection et/ou d'alerte peut comporter des composants électriques alimentés par la batterie 6, et/ou panneau solaire ou tout autre moyen approprié.

## Revendications

1. Dispositif (100) de fourniture de gaz comprenant un cadre (1) muni d'une base et abritant une pluralité de bouteilles (2) de fluide sous pression reliées à circuit (7) fluidique pour assurer le soutirage ou le remplissage des bouteilles (2), ledit circuit (7) comprenant une première extrémité de raccordement reliée aux bouteilles et une seconde extrémité comprenant au moins un raccord (10) fluidique destiné à être raccordé de façon amovible avec un organe de soutirage ou de remplissage des bouteilles (2), le cadre (1) comprenant, sur une de ses faces, au moins une ouverture (20) d'accès à au moins un raccord (10) du circuit (7), le cadre (1) comprenant en outre au moins un organe (16, 150) d'accrochage prévu pour coopérer avec un appareil de levage du cadre (1), **caractérisé en ce que** le dispositif comprend au moins un capteur (110) de levage du cadre (1) via le au moins un organe (16, 160) d'accorchage et au moins un capteur (41) de détection d'un accès à un raccord (10), le dispositif comprenant en outre au moins un organe (120, 130, 140) d'alerte configuré générer automatiquement une alerte lorsqu'à la fois le capteur (110) de levage détecte un levage du cadre et le capteur (41) de détection d'accès détecte un accès à un raccord (10).

2. Dispositif selon la revendication, **caractérisé en ce que** le cadre comprend un panneau (19) d'interface, l'ouverture d'accès au(x) raccord(s) (10) étant ménagée dans ledit panneau (19), le capteur (41) de détection d'accès au(x) raccord(s) étant configuré pour détecter un accès au(x) raccord(s) (10) via ladite ouverture (20).

3. Dispositif selon la revendication 1 ou 2, **caractérisé en ce que** le au moins un organe d'accrochage comprend un anneau (150) de levage situé en partie supérieure du cadre (1) et solidaire de la structure du cadre (1), le cadre (1) comprenant au moins un capteur (110) de levage parmi: un capteur (110) de détection d'un effort de traction sur l'anneau (150), un capteur de détection d'une connexion mécanique au niveau de l'anneau (150), le capteur réalisant via une mesure mécanique et/ou électrique et/ou optique et/ou magnétique.

4. Dispositif selon la revendication 3, **caractérisé en ce que** l'anneau (150) est mobile en translation par rapport à la base du cadre (1) entre une première position basse lorsque le cadre (1) n'est pas soulevé via l'anneau (150) et une seconde position haute lorsque le cadre (1) est soulevé par l'anneau (150), le capteur (110) de levage comprenant un interrupteur détectant le passage de l'anneau (150) de la première à la seconde position.

5. Dispositif selon la revendication 4, **caractérisé en ce que** l'anneau (150) est monté coulissant dans un tube (17) creux du cadre formant un mât central relié à la base du cadre (1).

6. Dispositif selon l'une quelconque des revendications 1 à 5, **caractérisé en ce que** le au moins un organe d'accrochage comprend un ou plusieurs logements (16) ménagés dans la base du cadre (1), lesdits logements (16) étant parallèles à la base du cadre et étant configurés pour accueillir une ou des fourches d'un engin de levage, le au moins un capteur (110) de levage comprenant un interrupteur configuré pour être activé par l'introduction ou le mouvement d'un corps étranger tel qu'une fourche dans au moins un logement (16).

7. Dispositif selon les revendications 5 et 6 prises en combinaison, **caractérisé en ce que** l'anneau (150) est solidaire de l'extrémité supérieure d'un axe (5) monté coulissant dans le tube (17) creux et **en ce que** l'extrémité inférieure dudit axe (5) est reliée à une palette (9) débouchant dans le ou les logements (16), ladite palette (9) étant mobile entre une position basse et une position haute.

8. Dispositif selon la revendication 7, **caractérisé en ce que** le au moins un capteur (110) de levage comprend un interrupteur coopérant avec la palette (9) ou une pièce reliée mécaniquement à la palette (9).

9. Dispositif selon l'une quelconque des revendications 1 à 8, **caractérisé en ce que** le au moins un capteur (41) de détection d'accès à un raccord (10) comprend au moins un parmi : un capteur électrique, un capteur optique, un capteur mécanique, un capteur magnétique.

10. Dispositif selon l'une quelconque des revendications 1 à 9, **caractérisé en ce que** le cadre (1) comprend un cache (14) mobile entre une première position de fermeture de la au moins une ouverture (20) pour empêcher l'accès à un raccord (10) et une seconde position d'ouverture autorisant l'accès au raccord (10) et **en ce que** le au moins un capteur (41) de détection d'accès à un raccord (10) est configuré pour détecter la position ouverte ou fermée dudit cache (14).

11. Dispositif selon l'une quelconque des revendications 1 à 10, **caractérisé en ce qu'**il comprend au moins un organe (120, 130, 140) d'alerte parmi : un avertisseur sonore, un avertisseur lumineux.

12. Dispositif selon l'une quelconque des revendications 1 à 11, **caractérisé en ce que** le au moins un organe (120, 130, 140) d'alerte est relié par voie filaire ou sans fil au(x)dit(s) capteurs (41, 110).
